# FASCICULE DE BREVET EUROPEEN

(11) **EP 1 961 984 B1**
(45) Date de publication et mention de la délivrance du brevet: **09.06.2010**
(21) Numéro de dépôt: 08356029.2
(22) Date de dépôt: 20.02.2008
(51) Int. Cl.: F16C 33/60, F16C 33/78

(54) **Roulement pour métier à tisser avec cavité de lubrification et système de tirage de métier à tisser comprenant un tel roulement**
Lager für die Webtechnik mit einem Hohlraum zur Schmierung und einer Ziehvorrichtung für die Webtechnik mit solch einem Lager
Bearing for the weaving industry with a hollow for lubrication and a pull system for the weaving industry comprising such a bearing

(30) Priorité: 22.02.2007 FR 0701274
(43) Date de publication de la demande: 27.08.2008
(73) Titulaire: STAUBLI FAVERGES, 74210 FAVERGES (FR)
(72) Inventeur: Fumex, André, 74210 Cons Sainte Colombe (FR)
(74) Mandataire: Myon, Gérard Jean-Pierre

(56) Documents cités:
- DE-A1- 4 336 075
- DE-A1- 19 650 731
- DE-A1- 19 915 975
- DE-B3- 10 316 320
- DE-U1- 29 623 928
- FR-A- 2 162 998
- FR-A1- 2 634 261

## Description

L'invention concerne un roulement à rouleaux destiné à équiper un système de tirage de métier à tisser ainsi qu'un système de tirage comprenant un tel roulement.

Un dispositif de formation de la foule de métier à tisser comprend généralement plusieurs cadres de lisses actionnés individuellement par un système de tirage. Le système de tirage comprend un ensemble de bielles et de leviers pour chaque cadre de lisses, les ensembles étant montés en parallèle dans un espace réduit.

Les éléments du système de tirage sont articulés entre eux selon des liaisons pivotantes réalisées au moyen de roulements à billes ou à rouleaux. Ces derniers présentent une capacité de charge supérieure aux roulements à billes. Ces roulements présentent un encombrement axial limité par la division relativement fine de l'espace logeant les ensembles. L'entretien des roulements est compliqué par la difficulté d'accès à ces roulements généralement placés sous les cadres de lisses et relativement loin les uns des autres.

EP-A-0 437 896 décrit un roulement à rouleaux étanche présentant une capacité de charge relativement limitée. En effet, les flasques de roulement qui guident axialement les rouleaux sont relativement épais, ce qui réduit la longueur axiale des rouleaux et donc leur capacité de charge. De plus, la lèvre de chaque joint d'étanchéité latéral se situe radialement au niveau des rouleaux, si bien qu'elle peut être écartée par la graisse refoulée des chemins de roulement au cours du fonctionnement. Cette perte de produit lubrifiant impose un entretien du roulement relativement fréquent et en limite la durée de vie.

EP-A-0 602 711, voir préambule de la revendication 1 de la demande présente, décrit un roulement à rouleaux étanche emmanché dans l'alésage d'une partie mâle constituée par un levier ou une agrafe de réglage de foule telle que celle décrite dans EP-A-0 744 482. La capacité de charge d'un tel roulement est également limitée par l'épaisseur relativement importante de ses flasques. En outre, les flasques sont recouverts d'une couche de caoutchouc appartenant à un joint à lèvres et dont l'encombrement axial réduit également la longueur maximale des rouleaux donc leur capacité de charge.

Par ailleurs, dans le roulement décrit par EP-A-0 602 711, le produit lubrifiant dispose d'un volume libre restreint car limité aux seuls interstices entre rouleaux. Or, ces interstices sont balayés par les rouleaux au cours des oscillations du roulement, si bien que le produit lubrifiant est très sollicité et présente conséquemment une durée de vie réduite.

DE-A-1 965 0731 décrit un roulement à rouleaux comprenant deux flasques qui sont disposés sur les flancs des rouleaux et qui définissent chacun une cavité de lubrification. Les flasques, solidaires d'une bague du roulement, sont montés avec un jeu axial par rapport à des brides latérales ce qui leur confère une certaine mobilité. Du fait de ces jeux, la compacité axiale du roulement n'est pas optimale. En outre, les flasques subissent les efforts axiaux, exercés par les rouleaux, sans pouvoir les transmettre aux brides. Ces efforts axiaux sont donc en tout ou partie repris par la liaison des flasques avec la bague, ce qui peut altérer les flasques, leur liaison et/ou l'étanchéité des rouleaux. Par ailleurs le roulement décrit par DE-A-1 965 0731 n'incorpore pas de moyens d'étanchéité particuliers, si bien qu'il nécessite des apports réguliers en produit lubrifiant.

La présente invention vise notamment à remédier à ces inconvénients en proposant un roulement à rouleaux exerçant moins de contraintes sur le produit lubrifiant, nécessitant moins d'entretien et présentant une capacité de charge plus élevée que les roulements de l'état de la technique.

A cet effet, l'invention concerne un roulement à rouleaux pour système de tirage de métier à tisser comprenant :
- une bague intérieure et une bague extérieure s'étendant respectivement de part et d'autre des rouleaux selon une direction radiale et définissant deux chemins de roulement cylindriques, respectivement intérieur et extérieur,
- deux flasques solidaires de la bague intérieure et disposés respectivement et axialement près de chaque flanc des rouleaux, chaque flasque s'étendant radialement au-delà des chemins de roulement, les flasques et la bague intérieure étant destinés à être montés entre deux brides latérales appartenant au système de tirage.

Ce roulement est caractérisé en ce qu' au moins un flasque présente une forme définissant au moins une cavité jouxtant tout ou partie d'un flanc des rouleaux et apte à recevoir un produit lubrifiant et en ce que la bague intérieure présente deux épaulements latéraux définissant chacun une surface axiale d'appui respectivement pour chacune des brides, alors que la largeur de la bague intérieure avec ses épaulements est sensiblement égale à la distance séparant les faces axiales les plus externes des flasques.

En d'autres termes, le roulement comporte un volume libre dans lequel le produit lubrifiant peut s'accumuler sans être soumis aux contraintes exercées par les éléments roulants. Grâce à l'invention, le roulement bénéficie d'une lubrification améliorée et donc d'une durée de vie supérieure.

Selon d'autres caractéristiques avantageuses de l'invention :
- le roulement comprend deux joints à lèvres radiales disposés respectivement de chaque côté des rouleaux, chaque lèvre coopérant avec une surface radiale de la bague extérieure ;
- chaque flasque présente une forme définissant au moins une cavité ;
- les deux flasques sont structurés et agencés symétriquement par rapport au plan bissecteur des rouleaux ;
- le ou chaque flasque est constitué d'une couronne globalement plane et présentant une portion radiale intérieure et une portion radiale extérieure annulaires, les portions radiales étant reliées par une rainure centrale annulaire formant un enfoncement situé en retrait axial par rapport aux portions radiales intérieure et extérieure, l'enfoncement définissant la cavité ;
- la portion radiale extérieure recouvre une région annulaire de la bague extérieure avec un jeu axial ;
- l'épaisseur de chaque épaulement est sensiblement égale à la distance axiale séparant la face interne de la portion radiale intérieure située en regard de la bague intérieure de la face externe de la rainure centrale du flasque correspondant ;
- chaque joint présente un corps annulaire solidarisé à la face axiale externe de la portion radiale extérieure du flasque correspondant ;
- le corps annulaire présente une épaisseur inférieure au retrait axial de l'enfoncement de la rainure ;
- la cavité jouxte les rouleaux sur toute leur étendue radiale ;
- la cavité jouxte radialement une partie de la bague intérieure et une partie des rouleaux ;
- le produit lubrifiant est à l'état liquide ou visqueux, la bague extérieure est percée d'au moins un trou radial destiné à permettre le remplissage des cavités par le produit lubrifiant, et au moins l'une des parois annulaires axiales de la bague intérieure comporte au moins une chambre débouchant dans l'une des cavités et apte à recevoir du produit lubrifiant ;
- le produit lubrifiant est constitué d'une garniture à l'état solide s'étendant dans la cavité et entre les rouleaux.

Par ailleurs, l'invention concerne un système de tirage pour métier à tisser comprenant au moins une bielle et au moins un levier, caractérisé en ce que la bielle et le levier sont reliés au moyen d'un roulement tel que précédemment exposé, les brides étant constituées par la bielle et solidarisées à la bague intérieure au moyen d'un boulon biconique serré au niveau des brides.

L'invention sera bien comprise à la lecture de la description qui va suivre, donnée uniquement à titre d'exemple et faite en se référant aux dessins annexés, dans lesquels :
- la figure 1 est une vue de face d'une partie d'un système de tirage conforme à la présente invention ;
- la figure 2 est une coupe à plus grande échelle selon la ligne II-II d'un roulement conforme à un premier mode de réalisation de l'invention ;
- la figure 3 représente à plus grande échelle le détail III de la figure 2 ;
- la figure 3A représente à plus grande échelle le détail A à la figure 3;
- la figure 4 est une vue partielle en perspective d'un flasque du roulement représenté sur les figures 2 et 3.
- la figure 5 est une vue analogue à la figure 4 pour une variante du flasque ; et
- la figure 6 est une coupe analogue à la figure 3 pour un roulement conforme à un deuxième mode de réalisation de l'invention.

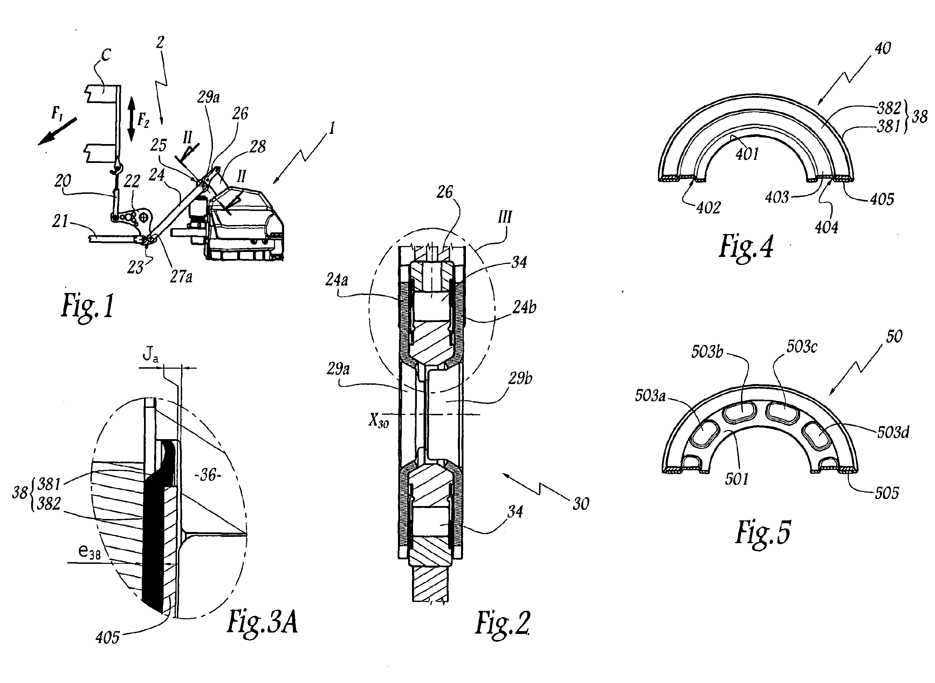

La figure 1 présente un dispositif de formation de la foule comprenant plusieurs cadres de lisses, dont un est représenté sur cette figure avec la référence C. De manière connue en soi, le cadre C est équipé de lisses non représentées dont l'oeillet est traversé par un fil de chaîne symbolisé par la flèche F₁ indiquant son sens de déplacement selon une direction perpendiculaire au plan du cadre C.

Chaque cadre est animé d'un mouvement d'oscillation verticale dans le sens de la double flèche F₂. Ce mouvement est transmis, notamment, par une bielle distale 20 attelée en partie basse du cadre C ainsi que sur un levier oscillant 22. Le levier 22 est relié par l'intermédiaire d'une bielle proximale 24 et d'une agrafe de réglage de foule 26 à un bras d'entraînement 28, qui est lui-même mis en mouvement par une ratière 1. Le système de tirage 2 comprend en outre une bielle 21 partiellement représentée sur la figure 1 et destinée à transmettre le mouvement du levier oscillant 22 à l'extrémité non représentée du cadre C, via un autre levier oscillant et une autre bielle distale.

Les liaisons pivotantes de la bielle proximale 24 avec l'agrafe 26, d'une part, et avec le levier 22, d'autre part, sont réalisées au moyen de roulements à rouleaux décrits plus en détails en relation avec les figures 2 à 6. Les bagues extérieures des roulements à rouleaux sont destinées à être assemblés par emmanchement dans un alésage 25 de l'agrafe 26 ou dans un alésage 23 du levier 22. Les bagues intérieures des roulements sont solidarisées à la bielle au moyen de vis 27a ou 29a et d'écrous serrés dans la partie centrale des roulements.

La figure 2 montre un roulement 30 réalisant la liaison pivotante entre la bielle 24 et l'agrafe 26. Les éléments roulants du roulement 30 sont aptes à tourner autour d'un axe X₃₀ de symétrie de révolution du roulement 30. Les composants du roulement 30 sont guidés et maintenus axialement au moyen de deux brides latérales constituées ici par des branches d'extrémité 24a et 24b de la bielle 24.

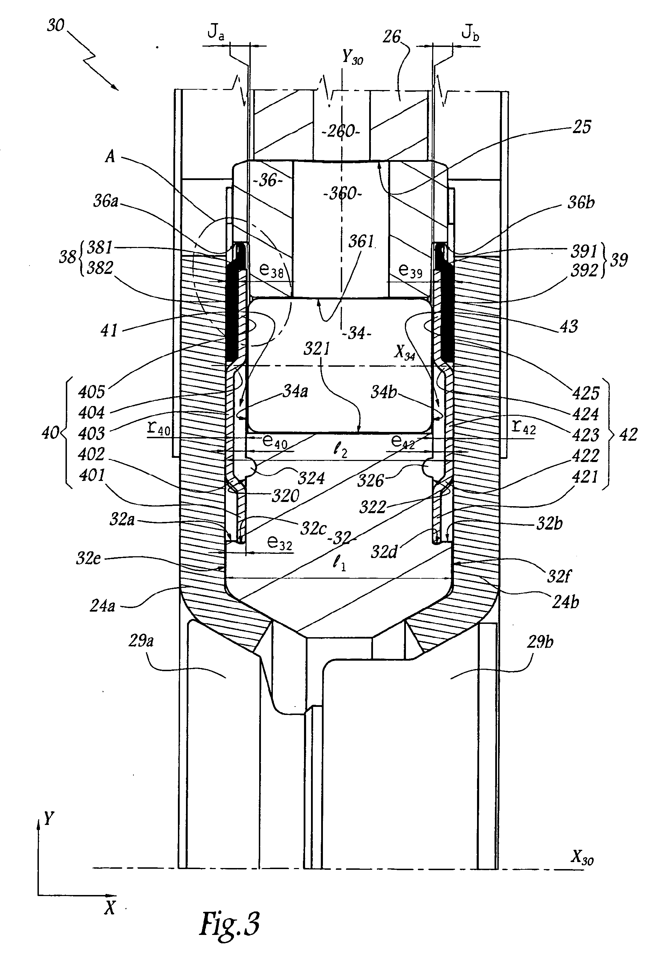

Comme le montre la figure 3, le roulement 30 comprend une bague intérieure 32 et une bague extérieure 36 entre lesquelles roulent des rouleaux 34. La bague intérieure s'étend dans un espace délimité, selon une direction radiale symbolisée par un axe Y, par un chemin de roulement intérieur 321 des rouleaux 34. La bague extérieure 36 s'étend quant à elle au-delà, selon la direction radiale Y, de l'espace délimité par un chemin de roulement extérieur 361 des rouleaux 34.

Les chemins de roulement 321 et 361 enveloppent les trajectoires suivies par les rouleaux 34 et ils sont ici en forme de cylindres droits. Par cylindre on désigne un cylindre à base circulaire, car les rouleaux 34 présentent une symétrie de révolution autour de leurs axes X₃₄ respectifs. Les rouleaux 34 sont jointifs. L'adjonction d'une cage de roulement entre et autour des rouleaux est possible, mais conduit à la réduction de la largeur axiale disponible pour les rouleaux.

Le roulement 30 comprend deux flasques 40 et 42 respectivement disposés de chaque côté des rouleaux 34, selon une direction axiale symbolisée par un axe X. Les flasques 40 et 42 ont pour fonction de guider et de maintenir axialement les rouleaux 34. Les flasques 40 et 42 sont donc aptes à reprendre des efforts axiaux exercés le cas échéant par les rouleaux 34.

Dans l'exemple de la figure 3, les flasques 40 et 42 sont structurés et agencés symétriquement par rapport au plan bissecteur des rouleaux 34 représenté sur la figure 3 par l'axe Y₃₀. Comme le montrent les figures 3 et 4, chaque flasque 40 ou 42 est constitué d'une couronne globalement plane.

Le flasque 40 présente une portion radiale intérieure 401 et une portion radiale extérieure 405 annulaires et coplanaires. Les adjectifs intérieur et extérieur définissent des entités respectivement proche et éloignée de l'axe X₃₀. Les portions radiales intérieure 401 et extérieure 405 sont reliées entre elles par une rainure centrale 403, également annulaire, et qui forme un enfoncement situé en léger retrait r₄₀ axial par rapport aux portions 401 et 405. Par rainure, on désigne ici la portion centrale pleine 403 d'un flasque, cette portion délimitant un volume annulaire et concave tourné vers l'axe Y₃₀. Il est possible de réaliser la rainure centrale 403 par l'emboutissage du flasque 40 au moyen d'un outil approprié. On réalise ainsi des pliures 402 et 404 de forme sensiblement tronconique et situées, selon la direction radiale Y, de part et d'autre de la rainure 403.

La description qui précède du flasque 40 peut être directement transposée au flasque 42, dans la mesure où celui-ci présente une structure symétrique. Les références numériques des éléments du flasque 42 sont obtenues en augmentant de 20 les références numériques des éléments correspondants du flasque 40. On obtient ainsi notamment les portions radiales intérieure 421 et extérieure 425, la rainure centrale 423 ainsi que les pliures 422 et 424.

Il est préférable de réaliser les flasques de roulement en matériaux durs et résistants à l'usure, tel qu'une tôle en acier à haute résistance.

Le retrait r₄₀ de la rainure 403 permet, lorsque le flasque 40 est mis en place à côté des rouleaux 34, de définir une cavité 41 jouxtant le flanc 34a correspondant des rouleaux 34 et dans laquelle un produit lubrifiant peut être accumulé. La cavité 41 est donc apte à recevoir un produit lubrifiant à l'état liquide ou visqueux, tel que de l'huile ou de la graisse, ou à l'état solide, tel qu'une garniture lubrifiante mentionnée ci-après. De plus, dans l'exemple de la figure 3, la paroi du flasque 40 qui forme la rainure 403 est pleine donc sans orifice. La cavité 41 est donc ici apte à retenir un produit lubrifiant fluide de façon relativement étanche.

Dans le mode de réalisation illustré par la figure 3, la cavité 41 jouxte le flanc 34a de chaque rouleau 34 seulement sur une partie de ce flanc radialement limitée à l'intervalle entre le chemin de roulement intérieur 321 et l'axe de symétrie X₃₄ de chaque rouleau 34. La pliure 404 est positionnée sensiblement au niveau de l'axe X₃₄ de chaque rouleau 34. La portion 405 du flasque 40 se trouve en regard et à proximité de la partie radiale extérieure de chaque rouleau 34.

De même, la rainure 423 du flasque 42 définit une cavité 43 symétrique à la cavité 41 par rapport au plan bissecteur du rouleau 34 et jouxtant le flanc 34b de ce rouleau. Les cavités 41 et 43 étant situées sur les flancs 34a et 34b des rouleaux 34, elles ne sont pas balayées par les surfaces cylindriques actives des rouleaux 34. Le produit lubrifiant qui s'accumule dans les cavités 41 et 43, qui peuvent être dénommées cavités de lubrification, n'est donc pas soumis continûment aux contraintes exercées par les rouleaux 34 sur les chemins de roulement 321 et 361, contrairement au roulement de EP-A-0 602 711. Cette caractéristique permet d'augmenter la durée de vie du produit lubrifiant et, partant, du roulement 30. On notera que le produit lubrifiant peut circuler autour du rouleau 34 et entre les cavités 41 et 43 en passant par les interstices qui séparent chaque rouleau 34 de ses voisins.

Comme le montre la figure 4, la cavité 41 définie par le flasque 40 présente une forme annulaire et régulière. Il est cependant possible de remplacer le flasque 40 ou le flasque 42 par un flasque 50 illustré sur la figure 5 et qui présente une forme moins régulière. En effet, la portion centrale du flasque 50, située entre une portion intérieure 501 et une portion extérieure 505 présente ici plusieurs bossages 503a à 503d disjoints et aptes à définir autant de cavités de lubrification. Les bossages 503a à 503d sont ici en forme de haricots limités à des secteurs angulaires inscrits sur un anneau commun segmenté de façon régulière. Il est néanmoins possible de définir une pluralité de cavités de lubrification en réalisant des flasques de géométries différentes.

Les portions 405 et 425 s'étendent radialement jusqu'à recouvrir chacune une région axiale annulaire intérieure de la bague 36. Les composants du roulement 30 sont dimensionnés et agencés de façon à ménager un jeu axial Jₐ entre la bague 36 et le flasque 40 ainsi qu'un jeu axial J_{b} entre la bague 36 et le flasque 42. Le jeu axial Jₐ est visible à plus grande échelle sur la figure 3A. Le jeu J_{b} n'est pas représenté à cette échelle, car il est ici symétrique au jeu Jₐ. Les jeux axiaux Jₐ et J_{b} sont déterminés de façon à générer une perte de charge pour l'écoulement du produit lubrifiant depuis les cavités 41 et 43 vers l'extérieur du roulement 30. Cette disposition contribue à augmenter l'étanchéité du roulement 30 et donc sa durée de vie. De plus, la bague 36 offre une certaine liberté de positionnement axial grâce aux jeux Jₐ et J_{b}, ce qui permet un léger vissage de la bague 32 au cours de ses mouvements oscillatoires.

De plus, le roulement 30 comprend deux joints à lèvres 38 et 39 disposés respectivement de chaque côté des rouleaux 34 et montés respectivement sur les faces externes des portions 405 et 425. A la différence des adjectifs intérieur et extérieur, les adjectifs externe et interne désignent des entités orientées selon une direction axiale respectivement vers l'extérieur du roulement 30 et vers l'intérieur du roulement 30, c'est-à-dire vers l'axe Y₃₀. Les joints 38 et 39 présentent deux lèvres radiales, respectivement 381 et 391, qui s'appuient chacune sur une surface radiale intérieure constituée par un épaulement respectif 36a et 36b de la bague 36. Par surface radiale, on désigne une surface perpendiculaire à une direction radiale, telle que définie par l'axe X, tandis que par surface axiale on désigne une surface perpendiculaire à une direction axiale, telle que définie par l'axe Y. La coopération des lèvres 381 et 391 avec les épaulements 36a et 36b permet de réaliser l'étanchéité du roulement 30 en limitant les fuites de produit lubrifiant vers l'extérieur.

Dans la mesure où l'étanchéité est réalisée sur une surface radiale, elle ne dépend pas des mouvements axiaux de la bague extérieure 36, contrairement au roulement de EP-A-0 602 711, dans lequel les lèvres des joints risquent de ne pas remplir leur fonction d'étanchéité de manière continue. Cette disposition des lèvres augmente donc la durée de vie du roulement 30.

Pour réaliser l'entretien du roulement 30, la bague 36 comporte un trou 360 radial et débouchant de façon à remplir en lubrifiant, en tant que de besoin, les cavités 41 et 43 et les interstices entre les rouleaux 34. L'emplacement du trou 360 est prévu de façon à coïncider avec un trou de graissage 260 ménagé dans l'agrafe 26 qui constitue ici la partie mâle pour l'assemblage du roulement 30.

La partie intérieure de la bague 32 présente deux épaulements latéraux 32a et 32b symétriques et situés respectivement de chaque côté des rouleaux 34. Ces épaulements 32a et 32b définissent chacun une surface axiale d'appui 32e et 32f, respectivement pour les brides 24a et 24b. Chaque épaulement 32a ou 32b comporte une gorge annulaire radiale 32c ou 32d réalisée respectivement à proximité de parois annulaires 320 et 322 axiales délimitant la bague 32. Les dimensions de la gorge annulaire 32c et de la portion 401 du flasque 40 permettent leur coopération mutuelle pour maintenir le flasque 40 solidaire de la bague 32 par une liaison élastique et amovible. De la même façon, le flasque 42 est maintenu dans la gorge 32d. On peut également envisager d'autres moyens de solidarisation des flasques 40 et 42 à la bague intérieure 32, tel qu'un sertissage à la molette ou qu'un soudage des flasques 40 et 42 respectivement centrés sur les épaulements 32a et 32b qui ne nécessitent alors plus de gorges 32c ni 32d.

Avantageusement, l'épaisseur axiale e₃₂ de chaque épaulement 32a et 32b est sensiblement égale à la distance axiale e₄₀ ou e₄₂ allant de la face interne de la portion intérieure 401 ou 421 située en regard de la bague intérieure 32 à la face externe de la rainure 403 ou 423 du flasque 40 ou 42 correspondant. Cela permet de réaliser concomitamment le maintien ou le guidage axial de la bague 32 et des flasques 40 et 42 au moyen des brides 24a et 24b. Les flasques 40 et 42 ainsi que la bague 32 sont donc solidarisés par appui surfacique avec les brides 24a et 24b, l'ensemble demeurant globalement immobile lors du fonctionnement du roulement 30. Ainsi, la largeur I₁ de la bague 32 avec ses épaulements est sensiblement égale à la distance axiale I₂ séparant les faces axiales les plus externes des flasques 40 et 42.

De cette manière, les efforts axiaux qui sont appliqués par les rouleaux 34 sur l'un des flasques 40 ou 42 sont transmis à la bride 24a ou 24b correspondante sans que ce flasque ne bouge.

De plus, cette caractéristique permet de maximiser la longueur axiale des rouleaux 34 et donc leur capacité de charge. Pour la même raison, les corps annulaires 382 et 392 des joints à lèvres 38 et 39 présentent des épaisseurs respectives e₃₈ et e₃₉ inférieures ou égales à l'intervalle séparant respectivement les portions 405 et 425 des brides 24a et 24b. Les corps annulaires 382 et 392 présentent donc des épaisseurs e₃₈ et e₃₉ inférieures ou égales aux retraits axiaux r₄₀ et r₄₂ des enfoncements définissant, respectivement les rainures 403 et 423.

La bague 32 et les brides 24a et 24b présentent des formes biconiques et complémentaires de façon à permettre le serrage d'une vis 29a et d'un écrou 29b à têtes coniques placés au centre du roulement 30 pour l'immobilisation des brides autour des éléments 32, 34, 36, 38 à 40 et 42. L'assemblage du roulement et des brides latérales peut néanmoins être réalisé par d'autres moyens, tel qu'un rivet cylindrique prenant en sandwich la bague intérieure et les brides latérales.

L'agencement des composants du roulement objet de l'invention permet une utilisation maximale de l'espace disponible et assure l'immobilisation des flasques de roulement 40 et 42 par rapport aux brides latérales.

Dans une variante moins avantageuse en termes de capacité de charge, les épaisseurs e₃₈ et e₃₉ peuvent être légèrement supérieures aux retraits axiaux r₄₀ et r₄₂ des enfoncements définissant les rainures 403 et 423. Ainsi, les faces axiales les plus externes des flasques 40 et 42 sont formées par les corps annulaires 382 et 392 des joints 38 et 39 qui appartiennent eux-mêmes respectivement aux flasques 40 et 42. Ces faces axiales constituent les faces axiales les plus externes des flasques et sont ainsi séparées par une distance axiale I₂ égale à la largeur I₁ de la bague 32 avec ses épaulements 32a et 32b.

Par ailleurs, les parois annulaires axiales 320 et 322 de la bague intérieure 32 comportent chacune une chambre 324 et 326 débouchant respectivement dans les cavités 41 et 43. Sur la figure 3, les chambres 324 et 326 sont formées par des gorges annulaires qui sont positionnées radialement en regard de la cavité 41 ou 43 correspondante. Les chambres 324 et 326 étant creuses, elles sont aptes à recevoir du produit lubrifiant, huile ou graisse, et à constituer ainsi une réserve supplémentaire. Cette réserve permet d'allonger encore la durée de vie du roulement 30. D'autres géométries sont envisageables pour former les chambres 324 et 326, de manière continue ou discontinue autour de l'axe du roulement 30. Les chambres 324 et 326 ne sont pas obligatoires pour la mise en oeuvre de l'invention.

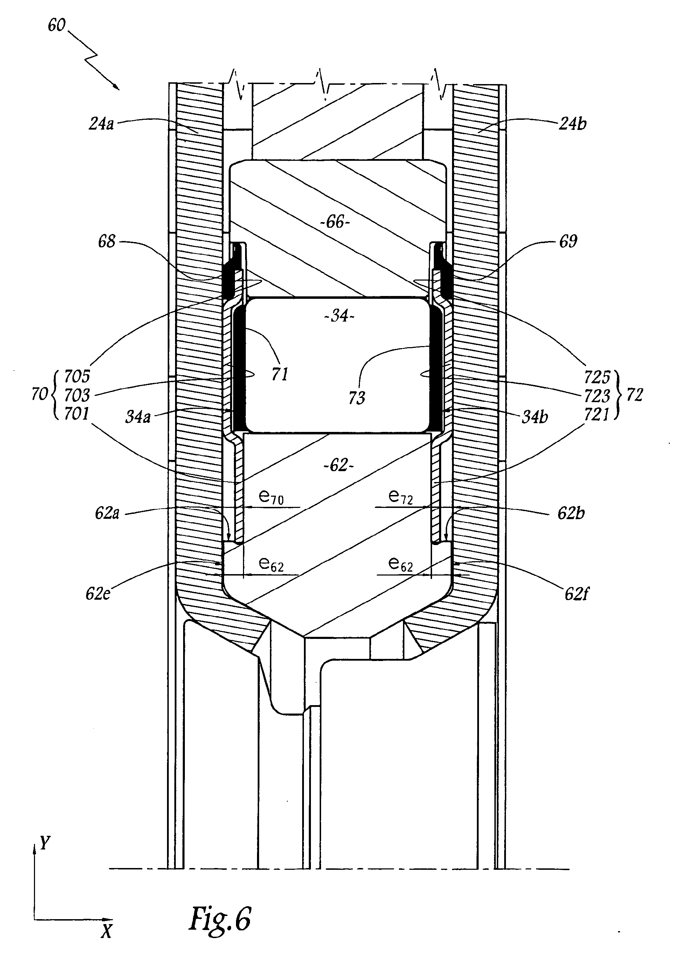

Le mode de réalisation illustré par la figure 6 est analogue à celui de la figure 3. Les différences entre le roulement 60 de la figure 6 et le roulement 30 de la figure 3 proviennent, d'une part, des dimensions des flasques 70 et 72 et, d'autre part, de la présence d'une garniture solide et autolubrifiante emplissant les cavités 71 et 73, lesquelles jouxtent les rouleaux 34 sur toute leur étendue radiale. La garniture solide est préalablement imprégnée de produit lubrifiant à l'état liquide qu'elle dégage petit à petit au cours du fonctionnement du roulement 60. La composition d'une telle garniture est connue par exemple de US-3 135 564. Elle permet de réaliser un roulement sans entretien et à très grande durée de vie. Elle occupe les cavités latérales 71 et 73 ainsi que les interstices situés entre rouleaux voisins et forme ainsi une sorte de cage avec laquelle se meuvent les rouleaux 34.

La largeur radiale de la rainure centrale 703 ou 723 des flasques 70 ou 72 correspond sensiblement à l'encombrement radial des rouleaux 34, si bien que les cavités 71 et 73 jouxtent l'intégralité des flancs 34a et 34b des rouleaux 34. Les flasques 70 et 72 présentent une portion extérieure, respectivement 705 et 725, plus courte que les portions extérieures 405 et 425 du roulement 30, mais néanmoins suffisante pour réaliser une perte de charge avec la bague extérieure 66.

Le roulement 60 est en outre équipé de joints 68 et 69 à lèvres radiales structurés et agencés de façon analogue aux joints 38 et 39 du roulement 30. Leur étendue radiale est toutefois écourtée, à l'instar des portions 705 et 725 qui leur servent respectivement de support.

Par ailleurs, les portions intérieures 701 et 721 des flasques 70 et 72 présentent une longueur supérieure respectivement aux portions 401 et 421 des flasques 40 et 42. Les portions 701 et 721 recouvrent presque toutes les surfaces annulaires axiales définies entre les épaulements 62a et 62b analogues aux épaulements 32a et 32b et le chemin de roulement de la bague 62. Comme dans le premier mode de réalisation, l'épaisseur axiale e₆₂ de chaque épaulement 62a ou 62b est sensiblement égale à l'encombrement axial e₇₀ ou e₇₂ du flasque 70 ou 72 correspondant.

L'invention ne se limite pas aux deux modes de réalisation décrits mais s'étend également à un roulement dont les flasques présenteraient des portions radiales extérieure et intérieure non co-planaires tout en ayant une cavité à profil oblique dont la profondeur axiale diffèrerait selon la portion considérée.

Cependant, l'épaisseur axiale e₃₂ de chaque épaulement serait sensiblement égale à la distance axiale allant de la face interne de la portion intérieure située en regard de la bague intérieure à la face externe de la rainure centrale. Ainsi, le roulement conserverait une largeur I₁ de la bague avec ses épaulements égale à la distance axiale I₂ séparant les faces axiales externes des flasques.

## Revendications

1. Roulement (30 ; 60) à rouleaux (34) pour système de tirage (20-29) de métier à tisser comprenant :
- une bague intérieure (32 ; 62) et une bague extérieure (36 ; 66) s'étendant respectivement de part et d'autre des rouleaux (34) selon une direction radiale (Y) et définissant deux chemins de roulement cylindriques, respectivement intérieur (321) et extérieur (361),
- deux flasques (40, 42 ; 70, 72) solidaires de la bague intérieure (32 ; 62) disposés respectivement et axialement près de chaque flanc (34a, 34b) des rouleaux (34), chaque flasque (40, 42 ; 70, 72) s'étendant radialement (Y) au-delà des chemins de roulement (321, 361), les flasques (40, 42 ; 70, 72) et la bague intérieure (32 ; 62) étant destinés à être montés entre deux brides latérales (24a, 24b) appartenant au système de tirage (20-29),
**caractérisé en ce qu'**au moins un flasque (40, 42 ; 70, 72) présente une forme définissant au moins une cavité (41, 43 ; 71, 73) jouxtant tout ou partie d'un flanc (34a, 34b) des rouleaux (34) et apte à recevoir un produit lubrifiant, **en ce que** la bague intérieure (32, 62) présente deux épaulements latéraux (32a, 32b ; 62a, 62b) définissant chacun une surface axiale d'appui (32e, 32f; 62e, 62f) respectivement pour chacune des brides (24a, 24b) et **en ce que** la largeur (I₁) de la bague intérieure (32 ; 62) avec ses épaulements latéraux (32a, 32b ; 62a, 62b) est égale à la distance (I₂) séparant les faces axiales les plus externes des flasques (40, 42 ; 70, 72).

2. Roulement (30 ; 60) à rouleaux (34) selon la revendication 1, **caractérisé en ce qu'**il comprend deux joints (38, 39 ; 68, 69) à lèvres radiales (381, 391) disposés respectivement de chaque côté des rouleaux (34), chaque lèvre (381, 391) coopérant avec une surface radiale (36a, 36b) de la bague extérieure (36).

3. Roulement (30 ; 60) à rouleaux (34) selon la revendication 1 ou 2, **caractérisé en ce que** chaque flasque (40, 42 ; 70, 72) présente une forme définissant au moins une cavité (41, 43 ; 71, 73).

4. Roulement (30 ; 60) à rouleaux (34) selon la revendication 3, **caractérisé en ce que** les deux flasques (40, 42 ; 70, 72) sont structurés et agencés symétriquement par rapport au plan bissecteur (Y₃₀) des rouleaux (34).

5. Roulement (30 ; 60) à rouleaux (34) selon l'une des revendications précédentes, **caractérisé en ce que** le ou chaque flasque (40, 42 ; 70, 72) est constitué d'une couronne globalement plane et présentant une portion radiale intérieure (401, 421 ; 701, 721) et une portion radiale extérieure (405, 425 ; 705, 725) annulaires, les portions radiales étant reliées par une rainure centrale (403, 423 ; 703, 723) annulaire formant un enfoncement situé en retrait (r₄₀, r₄₂) axial (X) par rapport aux portions radiales intérieure (401, 421 ; 701, 721) et extérieure (405, 425 ; 705, 725), l'enfoncement définissant la cavité (41, 43 ; 71, 73).

6. Roulement (30 ; 60) à rouleaux (34) selon la revendication 5, **caractérisé en ce que** la portion radiale extérieure (405, 425) recouvre une région annulaire de la bague extérieure (36) avec un jeu axial (Jₐ, J_{b}).

7. Roulement (30 ; 60) à rouleaux (34) selon l'une des revendications 5 à 6, **caractérisé en ce que** l'épaisseur (e₃₂ ; e₆₂) de chaque épaulement (32a, 32b ; 62a, 62b) est égale à la distance axiale (e₄₀, e₄₂ ; e₇₀, e₇₂) séparant la face interne de la portion radiale intérieure (401, 421 ; 701, 721) située en regard de la bague intérieure (32) de la face externe de la rainure centrale (403, 423 ; 703, 723) du flasque (40, 42 ; 70, 72) correspondant.

8. Roulement (30 ; 60) à rouleaux (34) selon la revendication 7, **caractérisé en ce que** chaque joint (38, 39 ; 68, 69) présente un corps annulaire (382, 392) solidarisé à la face axiale externe de la portion radiale extérieure (405, 425) du flasque (40, 42) correspondant.

9. Roulement (30 ; 60) à rouleaux (34) selon la revendication 8, **caractérisé en ce que** le corps annulaire (382, 392) présente une épaisseur (e₃₈, e₃₉) inférieure au retrait (r₄₀ ; r₄₂) axial (X) de l'enfoncement de la rainure (403, 423).

10. Roulement (60) à rouleaux (34) selon l'une des revendications 1 à 9, **caractérisé en ce que** la cavité (71, 73) jouxte les rouleaux (34) sur toute leur étendue radiale (Y).

11. Roulement (30 ; 60) à rouleaux (34) selon l'une des revendications 1 à 9, **caractérisé en ce que** la cavité (41, 43) jouxte radialement (Y) une partie de la bague intérieure (32) et une partie des rouleaux (34).

12. Roulement (30) à rouleaux (34) selon la revendication 11, **caractérisé en ce que** le produit lubrifiant est à l'état liquide ou visqueux et **en ce que** la bague extérieure (36) est percée d'au moins un trou radial (360) destiné à permettre le remplissage des cavités (41, 43) par le produit lubrifiant et **en ce qu'**au moins l'une des parois annulaires axiales (320, 322) de la bague intérieure (32) comporte au moins une chambre (324, 326) débouchant dans l'une des cavités (41, 43) et apte à recevoir du produit lubrifiant.

13. Roulement (60) à rouleaux (34) selon l'une des revendications précédentes, **caractérisé en ce que** le produit lubrifiant est constitué d'une garniture à l'état solide s'étendant dans la cavité (71, 73) et entre les rouleaux (34).

14. Système de tirage (20-29) pour métier à tisser comprenant au moins une bielle (20, 21, 24) et au moins un levier (22), **caractérisé en ce que** la bielle (20, 21, 24) et le levier (22) sont reliés au moyen d'un roulement (30, 60) selon l'une des revendications précédentes, les brides (24a, 24b) étant constituées par la bielle (24) et solidarisées à la bague intérieure (32 ; 62) au moyen d'un boulon biconique (29a, 29b) serré au niveau des brides (24a, 24b).

## Claims

1. Antifriction bearing (30; 60) of the roller (34) type for a pulling system (20-29) for a weaving loom, comprising:
- an inner race (32; 62) and an outer race (36; 66) lying one on each side of the rollers (34) in a radial direction (Y) and defining two cylindrical raceways, these being an inner one (321) and an outer one (361) respectively,
- two end plates (40, 42; 70, 72) secured to the inner race (32; 62) and positioned respectively and axially close to each flank (34a, 34b) of the rollers (34), each end plate (40, 42; 70, 72) lying radially (Y) beyond the raceways (321, 361), the end plates (40, 42; 70, 72) and the inner race (32; 62) being intended to be mounted between two lateral flanges (24a, 24b) belonging to the pulling system (20-29), **characterized in that** at least one end plate (40, 42; 70, 72) having a shape defining at least one cavity (41, 43; 71, 73) adjoining all or part of a flank (34a, 34b) of the rollers (34) and able to accept a lubricant, **in that** the inner race (32; 62) has two lateral shoulders (32a, 32b; 62a, 62b) each one defining an axial bearing surface (32e, 32f; 62e, 62f) for each of the flanges (24a, 24b) respectively, and **in that** the width (l₁) of the inner race (32; 62) with its lateral shoulders (32a, 32b; 62a, 62b) is equal to the distance (l₂) separating the outermost axial faces of the end plates (40, 42; 70, 72).

2. Antifriction bearing (30; 60) of the roller (34) type according to claim 1, comprising two radial lip seals (38, 39; 68, 69) which are positioned one on each side of the rollers (34), each lip (381, 391) collaborating with a radial surface (36a, 36b) of the outer race (36).

3. Antifriction bearing (30; 60) of the roller (34) type according to Claim 1, wherein each end plate (40, 42; 70, 72) has a shape defining at least one cavity (41, 43; 71, 73).

4. Antifriction bearing (30; 60) of the roller (34) type according to Claim 3, wherein the two end plates (40, 42; 70, 72) are structured and arranged symmetrically with respect to a plane (Y₃₀) that bisects the rollers (34).

5. Antifriction bearing (30; 60) of the roller (34) type according to claim, wherein the or each end plate (40, 42; 70, 72) consists of a generally flat ring having an inner radial portion (401, 421; 701, 721) and an outer radial portion (405, 425; 705, 725) both of which radial portions are annular and which are connected by an annular central groove (403, 423; 703, 723) that forms a depression (r₄₀, r₄₂) recessed axially (X) with respect to the inner (401, 421; 701, 721) and outer (405, 425; 705, 725) radial portions, the depression defining the cavity (41, 43; 71, 73).

6. Antifriction bearing (30; 60) of the roller (34) type according to Claim 5, wherein the outer radial portion (405, 425) covers an annular region of the outer race (36) with an axial clearance (Jₐ, J_{b}).

7. Antifriction bearing (30; 60) of the roller (34) type according to Claim 5, wherein the thickness (e₃₂; e₆₂) of each shoulder (32a, 32b; 62a, 62b) is equal to the axial distance (e₄₀, e₄₂; e₇₀, e₇₂) separating the internal face of the inner radial portion (401, 421; 701, 721) situated facing the inner race (32) from the external face of the central groove (403, 423; 703, 723) of the corresponding end plate (40, 41; 70, 72).

8. Antifriction bearing (30; 60) of the roller (34) type according to Claim 7, wherein each seal (38, 39; 68, 69) has an annular body (382, 392) secured to the external axial face of the outer radial portion (405, 425) of the corresponding end plate (40, 42).

9. Antifriction bearing (30; 60) of the roller (34) type according to Claim 8, wherein the annular body (382, 392) has a thickness (e₃₈, e₃₉) less than the extent (r₄₀; r₄₂) to which the recess of the groove (403, 423) is axially (X) recessed.

10. Antifriction bearing (60) of the roller (34) type according to Claim 1, wherein the cavity (71, 73) adjoins the rollers (34) over their entire radial extent (Y).

11. Antifriction bearing (30; 60) of the roller (34) type according to Claim 1, wherein the cavity (41, 43) radially (Y) adjoins part of the inner race (32) and part of the rollers (34).

12. Antifriction bearing (30) of the roller (34) type according to Claim 11, wherein the lubricant is in a liquid or viscous state and in that the outer race (36) is pierced with at least one radial hole (360) intended to allow the cavities (41, 43) to be filled with the lubricant, and wherein at least one of the axial annular walls (320, 322) of the inner race (32) has at least one chamber (324, 326) opening into one of the cavities (41, 43) and capable of accepting lubricant.

13. Antifriction bearing (60) of the roller (34) type according to claim 1, wherein the lubricant consists of a solid-state packing extending into the cavity (71, 73) and between the rollers (34).

14. Pulling system (20-29) for a weaving loom comprising at least one link rod (20, 21, 24) and at least one lever (22), wherein the link rod (20, 21, 24) and the lever (22) are connected by means of an antifriction bearing (30, 60) according to claim 1, the flanges (24a, 24b) consisting of the link rod (24) and being secured to the inner race (32; 62) by means of a biconical bolt (29a, 29b) clamped at the flanges (24a, 24b).

## Patentansprüche

1. Rollenlager (30; 60; 34) für eine Ziehvorrichtung (20 - 29) einer Webmaschine umfassend:
- einen Innenring (32; 62) und einen Außenring (36; 66), die sich jeweils beidseitig der Rollen (34) gemäß einer radialen Richtung (Y) erstrecken und zwei zylindrische Laufbahnen, jeweils innen (321) und außen (361) begrenzen,
- zwei mit dem Innenring (32; 62) verbundene Flansche (40, 42; 70, 72), die jeweils und axial bei jeder Flanke (34a, 34b) der Rollen (34) angeordnet sind, wobei jeder Flansch (40, 42; 70, 72) sich radial (Y) über die Laufbahnen (321, 361) hinaus erstreckt und die Flansche (40, 42; 70, 72) und der Innenring (32; 62) vorgesehen sind, zwischen zwei Seitenwangen (24a, 24b) montiert zu werden, die zu der Ziehvorrichtung (20 - 29) gehören, **dadurch gekennzeichnet, dass** mindestens ein Flansch (40, 42; 70, 72) eine Form aufweist, die mindestens einen Hohlraum (41, 43; 71, 73) definiert, der ganz oder teilweise an eine Flanke (34a, 34b) der Rollen (34) angrenzt und geeignet ist, ein Schmiermittel aufzunehmen, dass der Innenring (32, 62) zwei seitliche Schultern (32a, 32b; 62a, 62b) aufweist, die jede eine axiale Auflage (32e, 32f; 62e, 62f) jeweils für jede Wange (24a, 24b) definieren und dass die Breite (l₁) des Innenrings (32; 62) mit seinen seitlichen Schultern (32a, 32b; 62a, 62b) gleich dem Abstand (l₂) ist, der die am weitesten außen liegenden axialen Flächen der Flansche (40, 42; 70, 72) trennt.

2. Rollenlager (30; 60; 34) nach Anspruch 1, **dadurch gekennzeichnet, dass** es zwei Dichtungen (38, 39; 68, 69) mit radialen Lippen (381, 391) umfasst, die jeweils an jeder Seite der Rollen (34) angeordnet sind, wobei jede Lippe (381, 391) mit einer radialen Fläche (36a, 36b) des Außenrings (36) zusammenarbeitet.

3. Rollenlager (30; 60; 34) nach Anspruch 1 oder 2, **dadurch gekennzeichnet, dass** jeder Flansch (40, 42; 70, 72) eine Form aufweist, die mindestens einen Hohlraum (41, 43; 71, 73) definiert.

4. Rollenlager (30; 60; 34) nach Anspruch 3, **dadurch gekennzeichnet, dass** die zwei Flansche (40, 42; 70, 72) strukturiert sind und symmetrisch in Bezug auf die Halbierungsebene (Y₃₀) der Rollen (34) angeordnet sind.

5. Rollenlager (30; 60; 34) nach einem der vorhergehenden Ansprüche, **dadurch gekennzeichnet, dass** der oder jeder Flansch (40, 42; 70, 72) aus einer im Wesentlichen ebenen Krone gebildet ist und einen ringförmigen radialen Innenbereich (401, 421; 701, 721) und einen ringförmigen radialen Außenbereich (405, 425; 705, 725) aufweist, wobei die radialen Bereiche durch eine ringförmige zentrale Nut (403, 423; 703, 723) verbunden sind, die eine Vertiefung bildet, die im axialen (X) Rücksprung (r₄₀, r₄₂) in Bezug auf die radialen Innen- (401, 421; 701, 721) und Außenbereiche (405, 425; 705, 725) liegt, wobei die Vertiefung den Hohlraum (41, 43; 71, 73) definiert.

6. Rollenlager (30; 60; 34) nach Anspruch 5, **dadurch gekennzeichnet, dass** der radiale Außenbereich (405, 425) einen Ringbereich des Außenrings (36) mit einem axialen Spiel (Jₐ, J_{b}) überdeckt.

7. Rollenlager (30; 60; 34) nach einem der Ansprüche 5 bis 6, **dadurch gekennzeichnet, dass** die Dicke (e₃₂; e₆₂) jeder Schulter (32a, 32b; 62a, 62b) gleich dem axialen Abstand (e₄₀, e₄₂; e₇₀, e₇₂) ist, der die Innenfläche des radialen Innenbereichs (401, 421; 701, 721), der gegenüberliegend zum Innenring (32) liegt, von der Außenfläche der zentralen Nut (402, 423; 703, 723) des entsprechenden Flansches (40, 42; 70, 72) trennt.

8. Rollenlager (30; 60; 34) nach Anspruch 7, **dadurch gekennzeichnet, dass** jede Dichtung (38, 39; 68, 69) einen ringförmigen Körper (382, 392) aufweist, der mit der axialen Außenfläche des radialen Außenbereichs (405, 425) des entsprechenden Flansches (40, 42) verbunden ist.

9. Rollenlager (30; 60; 34) nach Anspruch 8, **dadurch gekennzeichnet, dass** der ringförmige Körper (382, 392) eine Dicke (e₃₈, e₃₉) aufweist, die kleiner als der axiale (X) Rücksprung (r₄₀; e₄₂) der Vertiefung der Nut (403, 423) ist.

10. Rollenlager (60; 34) nach einem der Ansprüche 1 bis 9, **dadurch gekennzeichnet, dass** der Hohlraum (71, 73) benachbart zu den Rollen (34) über ihre gesamte radiale Ausdehnung (Y) liegt.

11. Rollenlager (30; 60; 34) nach einem der Ansprüche 1 bis 9, **dadurch gekennzeichnet, dass** der Hohlraum (41, 43) radial (Y) benachbart zu einem Teil des Innenrings (32) und einem Teil der Rollen (34) liegt.

12. Rollenlager (30; 34) nach Anspruch 11, **dadurch gekennzeichnet, dass** das Schmiermittel flüssig oder viskos ist und dass der Außenring (36) mit mindestens einem radialen Loch (360) durchbohrt ist, das vorgesehen ist, die Füllung der Hohlräume (41, 43) durch das Schmiermittel zu erlauben, und dass mindestens eine der ringförmigen axialen Wände (320, 322) des Innenrings (32) mindestens eine Kammer (324, 326) umfasst, die in eine der Hohlräume (41, 43) mündet und geeignet ist, das Schmiermittel aufzunehmen.

13. Rollenlager (60; 34) nach einem der vorhergehenden Ansprüche, **dadurch gekennzeichnet, dass** das Schmiermittel aus einer Packung im festen Zustand besteht, die sich in den Hohlraum (71, 73) und zwischen die Rollen (34) erstreckt.

14. Zugvorrichtung (20 - 29) für eine Webmaschine, eine Zwischenstange (20, 21, 24) und mindestens einen Hebel (22) umfassend, **dadurch gekennzeichnet, dass** die Zwischenstange (20, 21, 24) und der Hebel (22) mittels eines Lagers (30, 60) nach einem der vorhergehenden Ansprüche verbunden sind, wobei die Wangen (24a, 24b) durch die Zwischenstange (24) gebildet werden und mit dem Innenring (32, 62) mittels eines doppelkonischen Bolzens (29a, 29b) verbunden sind, der an den Wangen (24a, 24b) verschraubt ist.
